## Europäisches Patentamt

## European Patent Office

## Office européen des brevets

(19)

(11) Veröffentlichungsnummer: **0 154 924**
**B1**

(12) **EUROPÄISCHE PATENTSCHRIFT**

(45) Veröffentlichungstag der Patentschrift:
12.07.89

(51) Int. Cl.⁴: **C 08 G 63/52, C 08 L 67/06**

(21) Anmeldenummer: **85102450.5**

(22) Anmeldetag: **05.03.85**

(54) **Verwendung von niedrigviskosen, ungesättigten Polyestern zur Herstellung von monomerfreien Spachtelmassen.**

(30) Priorität: **14.03.84 DE 3409271**

(43) Veröffentlichungstag der Anmeldung:
**18.09.85 Patentblatt 85/38**

(45) Bekanntmachung des Hinweises auf die Patenterteilung:
**12.07.89 Patentblatt 89/28**

(84) Benannte Vertragsstaaten:
**BE DE FR GB IT NL SE**

(56) Entgegenhaltungen:
**EP-A-0 021 078**
**FR-A-2 147 890**
**FR-A-2 175 232**
**FR-A-2 367 093**
**FR-B-1 183 457**

**PATENT ABSTRACTS OF JAPAN, Band 4, Nr. 166 (C-31) 648, 18. November 1980; & JP-A-55 106 219 (NIPPON GOSEI KAGAKU KOGYO K.K.) 14.08.1980**

(73) Patentinhaber: **BAYER AG, D-5090 Leverkusen 1 Bayerwerk (DE)**

(72) Erfinder: **Meixner, Jürgen, Dr., Bethelstrasse 18, D-4150 Krefeld 1 (DE)**
Erfinder: **Margotte, Dieter, Dr., Wedelstrasse 48, D-4150 Krefeld 1 (DE)**

EP 0 154 924 B1

**Beschreibung**

Die Erfindung betrifft die Verwendung von ungesättigten Polyestern auf Basis von Dicarbonsäuren, Diolen und Allylethern als Bindemittel für Spachtelmassen. Durch die niedrige Viskosität wird kein copolymerisierbares Monomeres, wie z. B. Styrol, zur Herstellung von Spachtelmassen benötigt.

Ungesättigte Polyesterharze als Bindemittel für Spachtelmassen sind seit langem bekannt. Sie benötigen jedoch reaktive Lösemittel, wie z. B. Styrol, als copolymerisierbare Monomere.

Spachtelmassen eines guten Schleifverhaltens auf Basis von ungesättigten Polyestern, die eine so niedrige Viskosität besitzen, daß sie die für Spachtelmassen üblichen hohen Füllstoffmengen aufnehmen können, und die in Abwesenheit mit den Polyestern copolymerisierbarer Monomerer trotz eines sehr geringen Molekulargewichts mit Hilfe von Peroxiden zu klebfreien Produkten gehärtet werden können, waren bislang unbekannt.

Aufgabe der vorliegenden Erfindung war es nun, neue, monomerenfreie Spachtelmassen auf Basis von ungesättigten Polyestern zur Verfügung zu stellen, die in Gegenwart Peroxiden und Beschleunigern ausgehärtet werden können.

Überraschenderweise wurde nun gefunden, daß Polyester, die Reste von $\alpha,\beta$-ethylenisch ungesättigten Dicarbonsäuren, Diolen und Allylether enthalten und die ein niedriges Molekulargewicht besitzen, die gestellten Anforderungen erfüllen. Trotz der niedrigen Viskosität der Harze ist eine Aushärtung damit hergestellter Spachtelmassen in akzeptablen Zeiten möglich.

Gegenstand der Erfindung ist die Verwendung von ungesättigten Polyestern aus kondensierten Einheiten von

A) 0,5 bis 1,0 Mol mindestens einer $\alpha,\beta$-ethylenisch ungesättigten Dicarbonsäure oder deren Anhydrid,

B) 0 bis 0,5 Mol mindestens einer aromatischen oder aliphatisch gesättigten oder cycloaliphatischen gesättigten oder ungesättigten Dicarbonsäure oder deren Anhydrid,

C) 0,4 bis 0,8 Mol mindestens eines aliphatisch gesättigten zweiwertigen Alkohols,

D) 0,9 bis 1,2 Mol Trimethylpropandiallylether,

die ein als Zahlenmittel $\bar{M}_n$ bestimmtes Molekulargewicht von 700 bis 1.200 und eine Viskosität von 2.000 bis 5.000 mPa·s besitzen, als Bindemittel zur Herstellung von monomerenfreien Spachtelmassen.

Die EP-A-0 014 883 beschreibt zwar bereits ungesättigte Polyesterharze, die bezüglich ihrer chemischen Zusammensetzung den Bindemitteln der erfindungsgemäßen Spachtelmassen entsprechen, jedoch werden gemäß dieser Vorveröffentlichung die Polyester in Form von wässrigen Emulsionen zur Herstellung von Lacken verwendet. Irgendwelche Hinweise auf Spachtelmassen sind dieser Vorveröffentlichung nicht zu entnehmen.

Die FR-A-2 367 093 befaßt sich mit monomerfrei aushärtbaren ungesättigten Polyesterharzen, welche auch als Spachtelmassen Verwendung finden können. Die in dieser Vorveröffentlichung beschriebenen Harze unterscheiden sich von den erfindungsgemäß zu verwendenden Harzen jedoch durch ihren deutlich geringeren Gehalt an einkondensiertem Trimethylolpropandiallylether. Bezüglich der Eignung der Polyesterharze zur Herstellung von Spachtelmassen eines guten Schleifverhaltens ist jedoch ein hoher Gehalt an dieser Komponente wesentlich, wie beispielsweise aus den nachstehenden Vergleichsversuchen ersichtlich ist.

Beispiele für aromatische oder aliphatisch gesättigte oder cycloaliphatisch gesättigte oder ungesättigte Dicarbonsäuren sind: Bernsteinsäure, Adipinsäure, Sebacinsäure, Phthalsäure, Iso- und Terephthalsäure, Hexahydro- und Tetrahydrophthalsäure und Endo-methylentetrahydrophthalsäure.

Beispiele für aliphatisch gesättigte zweiwertige Alkohole sind: Ethylenglykol, Propandiol-1,2; Propandiol-1,3; Butandiol-1,2; Butandiol-1,3; Butandiol-1,4; Pentandiol-1,3; Hexandiol-1,6 und 2-Ethylhexandiol-1,6.

Die Säurezahlen der erfindungsgemäß zu verwendenden Polyester können 5 bis 50 betragen; die Viskosität wird im Höppler-Kugelfallviskosimeter nach DIN 53 015 bei 20°C bestimmt. Das Molekulargewicht wird dampfdruckmonometrisch in Dioxan als Lösungsmittel bestimmt.

Die Herstellung der erfindungsgemäß zu verwendenden Polyester kann nach bekannten Methoden, z. B. durch Schmelz- oder Azeotropveresterung der Alkohole und Säuren oder deren veresterungsfähigen Derivate, erfolgen; vgl. "Methoden der Organischen Chemie" (Houben Weyl), 4. Auflage, Band 14/2, Georg Thieme Verlag, Stuttgart 1961, S. 1-5, 21-33, 40-44.

Um die erfindungsgemäß zu verwendenden Polyester vor vorzeitiger Vernetzung zu bewahren, empfiehlt es sich, bereits bei der Herstellung der Polyester 0,001 bis 0,1 Gew.-% Polymerisationsinhibitoren oder Antioxidantien zuzusetzen. Geeignete Stabilisatoren sind in "Methoden der Organischen Chemie" (Houben Weyl), 4. Auflage, Band 14/1, S. 433 ff, Georg Thieme Verlag, Stuttgart, 1961, beschrieben. Sehr gut geeignet ist z. B. p-Benzochinon in einer Konzentration von 0,01 bis 0,05 Gew.-%, bezogen auf erfindungsgemäße Polyester.

Hierzu können den Harzen übliche Füllstoffe, vorzugsweise in Mengen von 100 bis 350 Gew.-%, bezogen auf Polyester, und Pigmente sowie Sikkative in üblichen Mengen zugesetzt werden.

Unter Sikkativen werden Cobalt- und Mangansalze von Säuren - wie Leinölfettsäuren, Tallölfettsäuren, Sojafettsäuren - von Harzsäuren - wie Abietinsäuren und Naphthensäuren - von Essigsäure oder Isooctansäure verstanden. Bevorzugt werden Cobaltoctoat und Cobaltnaphthenat.

Zur Aushärtung dieser Spachtelmassen werden Hydroperoxide zugesetzt.

Bevorzugte Hydroperoxide sind tert.-Butylhydroperoxid, Pinanhydroperoxid, Cumolhydroperoxid, 2,5-Dimethylhexan-2,5-di-hydroperoxid, Cyclohexanonhydroperoxid, Methylethylketonhydroperoxid, 1-Oxy-1'-hydr-

2

operoxy-dicyclohexylperoxid und Diisopropylbenzolmonohydroperoxid.

Die Prozentangaben in den nachfolgenden Beispielen beziehen sich auf das Gewicht.

## Beispiele

Die in der nachfolgenden Tabelle 1 aufgeführten Ausgangskomponenten wurden bei 160 bis 180°C unter einem Stickstoffstrom der Schmelzkondensation unterworfen, bis die angegebene Säurezahl erreicht war. Die Spachtelmassen aus den erfindungsgemäßen ungesättigten Polyestern können in allen üblichen Mischaggregaten, wie Dissolver, Planetmischer, Zwangskneter, Butterfly-Mischer, hergestellt werden.

Beispiele zur Spachtelherstellung im Dissolver

Bei einem Behälter/Scheibendurchmesser-Verhältnis von ca. 2 : 1 werden Polyester, hochdisperse Kieselsäure und Pigment bei niedriger Umdrehungszahl vordispergiert und ca. 80 % der Füllstoffe zugegeben. Mit steigenden Drehzahlen (größere Randgeschwindigkeit) werden die restlichen Füllstoffe eingebracht. Nach der Füllstoffzugabe wird nach dieser Arbeitsweise eine Temperatur von 35 bis 40°C erreicht. Die Zugabe der Cobaltoctoat-Lösung erfolgte nach Abkühlung auf 30°C.

Für die Spachtelherstellung wurde folgende Rezeptur verwendet:

| | Gew.-% |
|---|---|
| Polyester | 33,84 |
| Kieselsäure, hochdispers | 0,33 |
| Titandioxid (Rutiltyp) | 8,00 |
| Talkum | 41,00 |
| Schwerspat | 16,50 |
| Cobaltoctoat-Lösung (10 % Co-Gehalt) | 0,33 |
| Spachtelmasse | 100,00 |

Zur Prüfung der Schleifbarkeit wurden je 100 g Spachtelmasse mit 2 g Cyclohexanonperoxidpaste (50 %-ig in Weichmacher) gemischt und auf ein entfettetes und geschliffenes Blech in einer Schichtdicke von 1 mm aufgetragen. Nach 3 h und 4 h wurde mittels Schleifpapier (80er Körnung) mit der Hand geschliffen.

## Beurteilung

Abrieb von 1 bis 5 ("sehr gut schleifbar" bis "nicht schleifbar"); Zusetzen des Schleifpapiers von a bis e ("setzt sich nicht zu" bis "Spachtel rollt sich").

Die Ergebnisse sind in Tabelle 2 aufgeführt.

### Tabelle 1

| Ausgangsmaterial (Mol) Eigenschaften | erfindungsgemäße Beispiele | | | Vergleichsbeispiele | |
|---|---|---|---|---|---|
| | 1 | 2 | 3 | 4 | 5 |
| Maleinsäureanhydrid | 0,7 | 1,0 | 0,9 | 1,0 | 0,5 |
| Phthalsäureanhydrid | - | - | 0,1 | - | 0,5 |
| Tetrahydrophthalsäureanhydrid | 0,3 | - | - | - | - |
| Ethylenglykol | - | 0,7 | - | - | - |
| Propandiol-1,2 | 0,55 | - | 0,45 | 0,65 | 0,55 |
| Dietylenglykol | - | - | 0,2 | - | - |
| Benzylalkohol | - | - | - | 0,2 | - |
| Glycerinmonoallylether | - | - | - | - | 0,55 |
| Trimethylolpropandiallylether | 1,0 | 1,0 | 1,0 | 0,8 | - |
| Säurezahl | 31 | 19 | 31 | 34 | 40 |
| Viskosität (mP·s) | 3600 | 3500 | 3300 | 3500 | fest |

**Tabelle 2**

| Eigenschaften | erfindungsgemäße Beispiele | | | Vergleichs-beispiele | |
|---|---|---|---|---|---|
| | 1 | 2 | 3 | 4 | 5 |
| Beurteilung des Spachtels nach 3 h | | | | | |
| Abrieb | 2-3 | 2-3 | 2-3 | 3 | - |
| Zusetzen des Schleifpapiers | a | a-b | a | c | - |
| Beurteilung des Spachtels nach 4 h | | | | | |
| Abrieb | 2 | 2 | 2 | 2-3 | - |
| Zusetzen des Schleifpapiers | a | a | a | c | - |

Während die erfindungsgemäßen Polyester 1 bis 3 zu Spachtelmassen mit guten Härtungseingenschaften führen, ist der Vergleichspolyester 4 für eine Anwendung als Bindemittel für Spachtelmassen nicht geeignet. Vergleichspolyester 5 kann ohne Lösungsmittel nicht zu Spachtel verarbeitet werden.

**Patentanspruch**

Verwendung von ungesättigten Polyestern aus kondensierten Einheiten von
A) 0,5 bis 1,0 Mol mindestens einer α,β-ethylenisch ungesättigten Dicarbonsäure oder deren Anhydrid,
B) 0 bis 0,5 Mol mindestens einer aromatischen oder aliphatisch gesättigten oder cycloaliphatischen gesättigten oder ungesättigten Dicarbonsäure oder deren Anhydrid,
C) 0,4 bis 0,8 Mol mindestens eines aliphatisch gesättigten zweiwertigen Alkohols,
D) 0,9 bis 1,2 Mol Trimethylpropandiallylether,
die ein als Zahlenmittel $\bar{M}_n$ bestimmtes Molekulargewicht von 700 bis 1.200 und eine Viskosität von 2.000 bis 5.000 mPa·s besitzen, als Bindemittel zur Herstellung von monomerenfreien Spachtelmassen.

**Claim**

The use of unsaturated polyesters of condensed units of
A) from 0.5 to 1.0 mol of at least one α,β-ethylenically unsaturated dicarboxylic acid or its anhydride,
B) from 0 to 0.5 mol of at least one aromatic or aliphatically saturated or cycloaliphatic saturated or unsaturated dicarboxylic acid or its anhydride,
C) from 0.4 to 0.8 mol of at least one aliphatically saturated dihydric alcohol,
D) from 0.9 to 1.2 mol of trimethylol propane diallyl ether,
which have a molecular weight determined as number average $\bar{M}_n$ of from 700 to 1200 and a viscosity of 2000 to 5000 mPa·s,
as binders for the production of monomer-free surfacing compositions.

**Revendication**

Utilisation de polyesters insaturés provenant d'unités condensées de
A) 0,5 à 1,0 mole d'au moins un acide dicarboxylique insaturé à insaturation ethylenique α, β ou de son anhydride,
B) 0 à 0,5 mole d'au moins un acide dicarboxylique aromatique ou aliphatique saturé ou cycloaliphatique saturé ou insaturé, ou de son anhydride,
C) 0,4 à 0,8 mole d'au moins un alcool bivalent aliphatique saturé,
D) 0,9 à 1,2 mole d'éther triméthylpropanediallylique qui possède un poids moléculaire déterminé par moyenne arithmétique $M_n$ de 700 à 1.200 et une viscosité de 2.000 à 5.000 mPa·s, en tant que liants pour la production de mastics bouche-pores exempts de monomères.